Europäisches Patentamt

European Patent Office

Office européen des brevets

(19)

(11) Publication number: **0 223 514**
**A1**

(12) # EUROPEAN PATENT APPLICATION

(21) Application number: 86308658.3

(22) Date of filing: 06.11.86

(51) Int. Cl.⁴ **C10G 49/00** , **C10G 45/58** ,
**B01J 8/02**

(30) Priority: 07.11.85 US 795816

(43) Date of publication of application:
27.05.87 Bulletin 87/22

(84) Designated Contracting States:
AT BE DE ES FR GB GR IT NL

(71) Applicant: **MOBIL OIL CORPORATION**
**150 East 42nd Street**
**New York New York 10017(US)**

(72) Inventor: **Graven, Richard George**
**28 West Shore Drive**
**Pennington New Jersey 08534(US)**
Inventor: **Zahner, John Clarence**
**25 Hamilton Avenue**
**Princeton New Jersey 08542(US)**

(74) Representative: **Cooper, John Anthony et al**
**Mobil Court 3 Clements Inn**
**London WC2A 2EB(GB)**

(54) **Reactor with recycle liquid distributor and use thereof.**

(57) An apparatus and process for contacting vapors and liquids with a fixed bed of catalysts. Oil and a reactant gas, preferably $H_2$, at conventional conversion conditions are passed down through a bed of porous solid catalyst. A portion of the treated oil from beneath the bed is recycled and redistributed over the catalyst bed. The total of the fresh feed rate and recycle oil flow rate may be kept constant. This technique is especially useful for hydrodewaxing of oils over zeolite catalysts.

EP 0 223 514 A1

# REACTOR WITH RECYCLE LIQUID DISTRIBUTOR AND USE THEREOF

This invention relates to an apparatus and process for contacting multi-phase reactants with a porous catalyst bed.

Chemical reactions between liquid and gases over solid catalysts present difficulties in obtaining intimate contact between phases. In conventional concurrent multiphase reactors, the gas and liquid may travel different flow paths. The gas flows in the direction of least pressure resistance. The liquid flows by gravity in a trickle path over and around the catalyst particles. The liquid may flow non-uniformly, leaving some of the catalyst bed underutilized due to lack of adequate wetting.

Attempts have been made to avoid maldistribution by providing multiple layers of catalyst with interlayered redistributors along the reactor longitudinal axis. Numerous multi-phase reactor systems have been developed. Fixed bed reactors where the diverse phases pass cocurrently over the catalyst, are shown in U.S. Patents No. 4,126,539, 4,235,847, 4,283,271, and 4, 396,538. These reactors are satisfactory but for certain needs, efficient multi-phase contact has been difficult to achieve.

Multi-phase reactors have been used for dewaxing, hydrogenation, desulfurizing, hydrocracking, isomerization and other treatments of liquid feedstocks, especially heavy distillates, lubricants, heavy oil fractions, residuum, etc.

In general, vapor-liquid distribution problems are more severe when heavy liquids and light gas are the reactants. The problems are especially severe in catalytic hydrodewaxing. Waxy feeds and $H_2$ pass over a catalyst of a medium pore siliceous zeolite having a constraint index of about 1 to 12, for example, an acidic ZSM-5 type pentasil aluminosilicate having a silica to alumina mole ratio greater than 12.

A better technique for operating multi-phase reactors, especially dewaxing reactors, under controlled flow conditions to maintain uniform gas-liquid contact and uniform liquid flux to assure uniform wetting of catalyst would minimize problems of flow and/or temperature maldistribution.

Accordingly, the present invention provides a reactor for contacting vapor and liquid with a bed of solid catalyst and comprising an inlet for vapor and liquid, an outlet for product recovery, and at least one catalyst bed for passing vapor and liquid in concurrent flow through the catalyst bed characterized by a liquid collection reservoir beneath the bed, connective with a liquid recycle and redistributor which recycles liquid from the reservoir to the catalyst bed above the reservoir.

In another embodiment, the present invention provides a process for treating a petroleum oil in a multi-phase fixed bed catalytic reactor by passing liquid oil and a vapor down through at least one bed of porous catalyst particles at conventional reaction conditions to produce a treated liquid petroleum oil characterized by recycling treated oil from below the catalyst bed and redistributing the treated liquid oil above the catalyst bed.

Figure 1 is a simplified process diagram showing a vertical reactor of the invention;

Figure 2 is a vertical cross-section view of a reactor showing a preferred liquid recycle technique; and

Figure 3 is a vertical cross section showing an alternative liquid recycle technique.

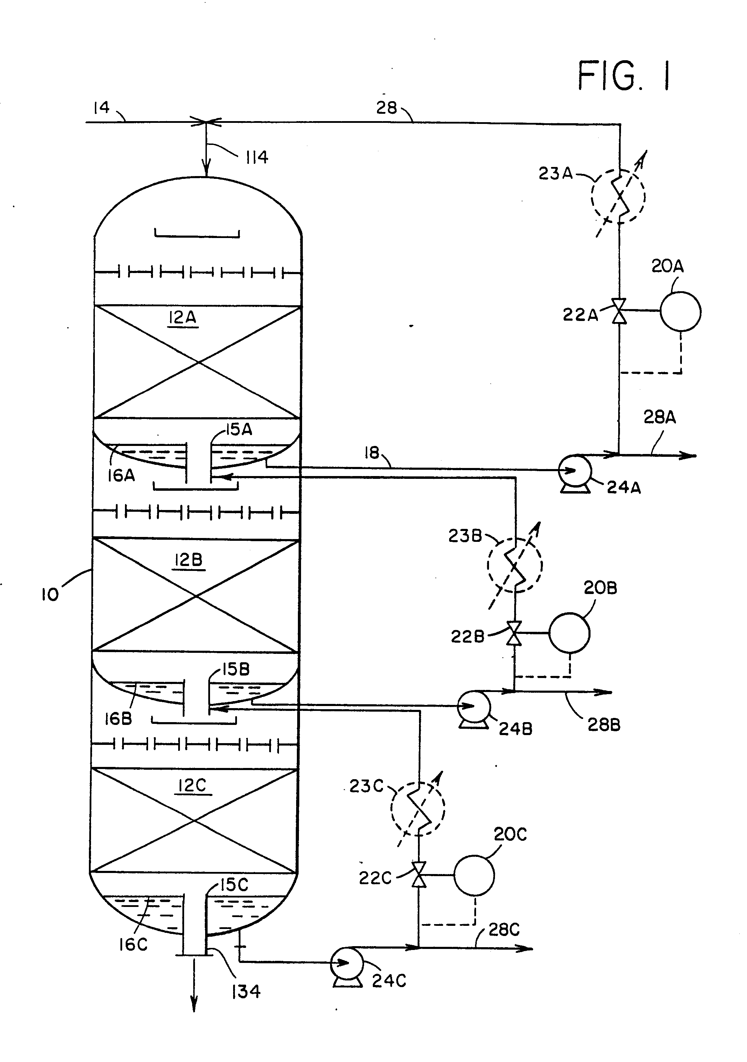

The reactor system is depicted schematically in Figure 1. The main fluid conduits are shown as solid lines. Control signals are shown as dashed lines. A vertical reactor 10 encloses and supports a stacked series of fixed porous solid catalyst beds 12A, 12B and 12C. A mixed feed of liquid oil and gas in line 14 and a recycle liquid in line 28 enter reactor 10 via inlet 114. The gas and liquid pass through bed 12A. The liquid from bed 124 collects as a pool, the top of which is shown as 16A. Vapor is removed and passed via conduit 15A into the next bed, 12B. The liquid is withdrawn via line 18 to pump 24. A liquid is recycled to the top of reactor 10 via line 28 to mix with feedstream 14. Flow controller 20A and valve 22A control recycle liquid flow. Uniform distribution of liquid and vapor to bed 12A is obtained by a conventional distributor tray system. Alternatively, lines 18 and 28 could connect to an internal liquid spray header distributor (not shown) to spray recycle liquid above bed 12A. Liquid product may be removed via line 28A, but usually all liquid removed via line 18 is recycled.

It is possible to adjust the recycle liquid temperature by heat exchange in exchanger 23A in the external flow loop. This can help control the temperature in bed 12A.

Liquid and gas flow down from bed 12A via conduit 15A into the next catalyst zone, bed 12B. The height of conduit 15A determines the liquid level 16A. Liquid overflows into conduit 15A. This overflow liquid and vapor are distributed to catalyst bed 12B by conventional means.

Pump 24B and flow controller 20B provide recycle to bed 12B so a substantially uniform liquid flux to bed 12B can be achieved under varying feed rates.

The operation of bed 12B and the succeeding beds is similar to that described for bed 12A, corresponding numbered elements being designated by letters A, B, C according to the association with beds 12A, 12B, 12C. Optional heat exchangers 23A, B, C permit the temperature of each recycle stream to be controlled independently. This permits temperature control of each catalyst bed section, and permits interstage sampling to determine the degree of conversion achieved in each bed.

Liquid product from the last bed, 12C, may be recovered via line 28C. Alternatively, or in addition, the vapor and overflow liquid existing reactor 10 via line 134 may be passed through conventional downstream processing steps, e.g., heat exchange, cooling, and vapor-liquid separation, with liquid product recovery from the vapor liquid separator, not shown.

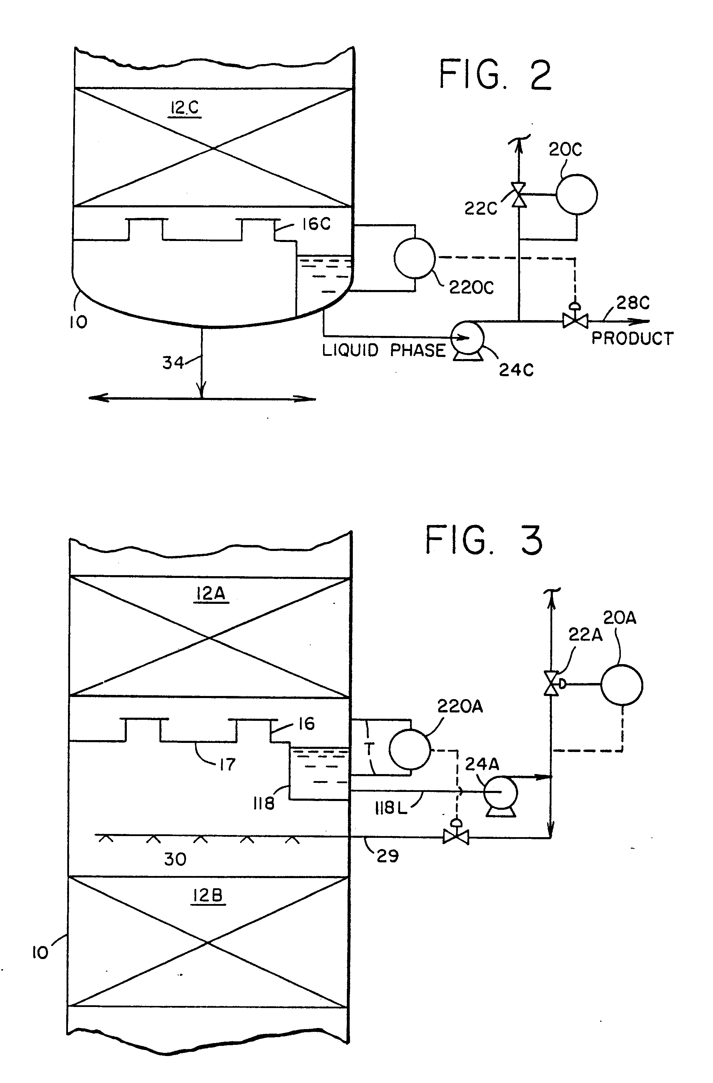

An alternate design of the bottom of the reactor is shown in Fig.2. Liquid and vapor from final bed 12C may be separated by baffle 16C. Vapor leaves reactor 10 through bottom gas outlet 34. Liquid product is removed via line 28C. The vapor is typically high in hydrogen content, e.g., 70 to 90 mol%, so it may be economic to recycle the hot vapor back to inlet 114 by means not shown to increase hydrogen circulation and partial pressure. This would probably require a smaller compressor than recycling cold gas from a conventional ambient temperature separator and would improve process thermal efficiency. This feature may apply to lubricant hydrodewaxing, hydrocracking, or residuum hydrotreating.

A continuous three-bed reactor was described for contacting vapor and liquid with a series of porous catalyst beds. It may be desired to have two, four or more beds. The catalyst may be the same in all beds, or different catalysts and reaction conditions may be used in each bed.

A typical reactor has a top inlet for feeding gas and liquid reactant streams and bottom product recovery means. It preferably will have at least two vertically-spaced porous catalyst beds in the reactor for contacting gas and liquid reactants in concurrent flow, with distributors for applying liquid uniformly over each bed. At least one interbed liquid accumulator will be used in a two-bed reactor, comprising a gravity flow liquid collection reservoir. The accumulator will have lines for withdrawing liquid, and pumps and flow controllers for passing some, typically 0-50% of the liquid entering the accumulator to at least one catalyst bed above the accumulator. A conventional distributor having liquid downcomers may be used above each bed.

Figure 3 is a vertical cross section view of another reactor design. Reactor 10 has catalyst beds 12A, 12B. Liquid and vapor from bed 12A pass to baffled phase separator 16. Liquid runs from horizontal collector plate 17 to a runoff reservoir 118. Liquid level in the reservoir is sensed via pressure taps T connected to level control 320A. Outlet 118L permits liquid to be withdrawn for recycle to bed 12A or discharge to bed 12B.

Liquid distribution above a bed is achieved by any conventional technique, such as distributor trays or spray headers 30, which projects the liquid onto the lower bed surface 12B at spaced points. A layer of balls, screen or perforated plate may be used to improve distribution. The liquid phase again contacts reactant gas, which passes through plate 17 via conventional vapor hats or openings.

The reactor can include a liquid level controller responsive to liquid level in reservoir 118, and a flow controller 20A for recirculating liquid from reservoir 118 at an inverse rate to liquid feed entering the reactor to maintain a substantially constant total liquid flux rate in the catalyst beds despite varying liquid feed rates.

The volume of recycle to any bed can be varied or maintained constant. Flows to the spray headers may be fixed by a plant operator. Automatic controllers may also be used.

A process control computer may send and receive signals from all flow measuring points, switching from one mode of control to another. A control system may generate a first signal representative of liquid feed rate to the reactor inlet, and a second signal representative of liquid recycle and add the first and second signals and control liquid recycle to keep total liquid flow constant. This will maintain a predetermined design bed flux rate.

The invention is adaptable to a variety of interphase catalytic reactions, particularly for treatment of heavy oils with $H_2$ at high temperature.

Lubricant stocks, derived by fractionating crude oil, may be hydrotreated, hydrocracked or isomerized in one or more catalytic reactors. An integrated three-step lube refining process disclosed by Garwood et al, in U.S. Patent 4,283,271 would benefit from the present invention.

In a typical multi-phase reactor system, the average gas-liquid volume ratio in the catalyst zone is about 1:4 to 20:1 under process conditions. Preferrably the liquid is supplied to the catalyst bed at a rate to occupy 10 to 50% of the void volume. The volume of gas may decrease due to reactant depletion, as the liquid feed and gas pass through the reactor. Vapor production, heating or expansion also affect the volume.

Advantageously, the multi-phase reactor system is operated to achieve uniform distribution and substantially constant liquid flux. If too little liquid flux is maintained, the catalyst surface in the porous bed may become dry or permit excessive channeling of the gas phase. Flow rates for both reactant phases are controlled so proper operation of the reactor can be assured.

The catalyst bed preferably has a void fraction greater than 0.25. Void fractions from 0.3 to 0.9 can be achieved using loosely packed polylobal or cylindrical extrudates, providing adequate liquid paths for uniformly wetting catalyst to enhance mass transfer and catalysis.

Catalyst size can vary widely. If a low space velocity or long residence in the catalytic reaction zone is permissible, catalysts having an average maximum dimension of 1 to 5mm are preferred.

Reactor configuration is important. A simple form is a vertical pressure vessel with a series of stacked catalyst beds of uniform cross-section. A typical vertical reactor having a total catalyst bed length to average width (L/D aspect) ratio of 1:1 to 20:1 is preferred. Stacked beds may be in the same reactor shell. Reactors of uniform horizontal cross section are preferred; however, non-uniform configurations may also be employed, with appropriate adjustments in the bed flux rate and corresponding recycle rates.

A stacked reactor design is preferred. Identical results can be achieved using side-by-side reactors, with pumps (rather than gravity) moving liquid from one bed to the next downstream bed.

The invention is especially useful in catalytic hydrodewaxing, employing heavy petroleum gas oil lubricant feedstock at a liquid space velocity of about 1 hr$^{-1}$ over randomly packed beds of 1.5 mm extrudate catalyst of ZSM-5 zeolite having a porosity (apparent void volume fraction) of 0.35 to 0.4. The hydrocarbon oil has a viscosity of 0.1 to 1 centipoise. The reactant gas is fed at a uniform rate.

While the embodiment shown in the drawing uses a vertical reactor, with superposed catalyst beds, it is possible to operate with side-by-side reactors. In this configuration, multiple reactor vessels are connected in series. A liquid recycle and redistribution zone may be provided for each bed and provide for liquid recycle and liquid redistribution within each catalyst bed. The sequential beds all share a common vapor phase atmosphere. There is unobstructed vapor phase flow from the first bed through the last bed. The liquid recycle and redistribution scheme used on any bed would be almost identical to that shown in Figure 1 and Figure 3. Liquid transfer from the first reactor bed to the second reactor bed could be accomplished by letting liquid overflow the liquid reservoir and be swept along by vapor flow into the second reactor bed or preferably by using a pump to remove all the liquid collected underneath the catalyst bed, with recirculation and redistribution of a portion of this liquid within the bed and discharge of the remainder to the next bed in the series.

The process and apparatus of the present invention may also be used in new, or retrofitted into existing, two-phase reactors containing only a single bed of catalyst. Although it is preferred to separate the reactor into multiple catalyst beds, collection of liquid from beneath the single catalyst bed, and recycle and redistribution of some of the liquid leaving the bed will significantly improve the performance of a single bed reactor wherein wetting of the catalyst bed due solely to fresh feed flow is inadequate, or may become inadequate because of changes in feed rate or feed properties.

## Claims

1. A reactor for contacting vapor and liquid with a bed of solid catalyst having an inlet for vapor and liquid, an outlet for product recovery, and at least one catalyst bed through which flows vapor and liquid in cocurrent flow characterized by a liquid collection reservoir beneath the catalyst bed, which is connective with a liquid redistributor which recycles liquid from the reservoir to the catalyst bed above the reservoir.

2. The reactor of Claim 1 further characterized by a flow controller for recycle liquid which maintains a substantially constant total liquid flux rate in the catalyst bed despite varying liquid feed rates.

3. The reactor of Claim 1 or 2 further characterized by multiple catalyst beds disposed in a single vertical reactor.

4. The reactor of Claim 1 or 2 further characterized by multiple catalyst beds in side-by-side vessels.

5. A process for treating a petroleum oil in a multi-phase fixed bed catalytic reactor by passing liquid oil and a vapor down through at least one bed of porous catalyst particles at conventional reaction conditions to produce a treated liquid petroleum oil characterized by recycling treated liquid oil from below the catalyst bed and redistributing the treated liquid oil above the catalyst bed.

6. The process of Claim 5 further characterized in that as the oil feed flow rate changes the amount of treated liquid oil recycled to the bed is automatically changed so that the sum of the feed rate and the recycle rate remains constant.

7. The process of Claim 5 or 6 further characterized in that recycled liquid oil is heat exchanged before redistribution above the catalyst bed.

8. The process of any of Claims 5-7 further characterized in that the reactor contains 2-4 catalyst beds disposed in a single vertical reactor.

9. The process of any of Claim 5-7 further characterized in that the reactor comprises at least two side-by-side beds sharing a common vapor phase.

10. The process of any Claims 5-9 further characterized in that the feed is a wax-containing lubricant oil feedstock which is hydrodewaxed with at least two beds of ZSM-5 type catalyst.

11. The process of any of Claims 5-10 further characterized in that the liquid recycle is sprayed over the catalyst bed.

FIG. 1

# FIG. 2

12C

16C

10

34

20C

22C

220C

LIQUID PHASE

24C

28C
PRODUCT

# FIG. 3

12A

16

17

118

118L

10

30

220A

T

24A

29

22A

20A

12B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-E- 80 706 (SHELL)<br><br>* Figure; abstract *<br><br>--- | | C 10 G 49/00<br>C 10 G 45/58<br>B 01 J 8/02 |
| A | US-A-4 194 964 (CHEN)<br><br>* Figure 1; claim 1 *<br><br>--- | | |
| A | DE-B-1 248 845 (SHELL)<br><br>* Figure *<br><br>--- | | |
| A | US-A-3 702 238 (ARMISTEAD)<br><br>* Figure 7; claim 1 *<br><br>----- | | |

**TECHNICAL FIELDS SEARCHED (Int. Cl.4)**

C 10 G
B 01 J

The present search report has been drawn up for all claims

| Place of search | Date of completion of the search | Examiner |
|---|---|---|
| THE HAGUE | 13-02-1987 | MICHIELS P. |